# EUROPEAN PATENT APPLICATION

(11) **EP 4 310 058 A1**
(43) Date of publication of application: **24.01.2024**
(21) Application number: 22382697.5
(22) Date of filing: 20.07.2022
(51) Int. Cl.: C02F 1/50, C02F 1/72, D21H 21/04, D21H 21/06, D21H 21/36, C02F 1/74, C02F 1/76, C02F 1/78, C02F 103/28

(54) **WATER TREATMENT PROCESS USING NANOBUBBLES AND BIOCIDE IN WOOD PULP, PAPER AND BOARD PRODUCTION**

(71) Applicant: WINGSCOMPANY, S.L., 29006 Málaga (ES)
(72) Inventor: Cobo Illana, Manuel Jesús, 29002 Málaga (ES)
(74) Representative: Sahuquillo Huerta, Jesús

(57) **Abstract**

**Method for treating water using nanobubbles and biocide in the production of wood pulp, paper and cardboard** that allows effective control of the microbiological population with greater efficiency than those exclusively based on biocides, minimising their consumption of water and biocide reducing the environmental impact applying natural elements and at a reduced cost. The method makes a combined use of gaseous nanobubbles in an aqueous medium and conventionally used biocides and consists of the following steps for the treatment of fresh supply and catchment water: 1st The water from a river, reservoir or well (1) passes through the nanobubble generator (2) in which an oxidising gas (3) is injected, said gas consisting of atmospheric air containing oxygen, pure oxygen, high-purity ozone or gaseous biocide, 2nd biocide (4) is added to the mixture with nanobubbles, and 3rd the water passes to the production process (5). It is also possible to reverse the order of the above steps, first adding the biocide to the water and second passing through the nanobubble generator. The treatment may also be applied to production process water, optionally with a storage step after the addition of the biocide.

## Description

Combined use of gaseous nanobubbles in an aqueous medium and conventionally used biocides in the production of wood pulp, paper or cardboard, including production process water, wastewater and fresh river, reservoir or well water supplying the production process.

### TECHNICAL FIELD

The present invention falls within the wood pulp, paper and cardboard industry, specifically in the processes for treating the water employed in their manufacture.

### BACKGROUND OF THE INVENTION

Together with wood fibres, water is the most important raw material in the paper and cardboard industry, being used in each of the steps of the production process, both to prepare the cellulose fibre pulp and as a means of transporting that cellulose fibre through the production machine, as well as in the production of energy and steam for thermal and mechanical processes and other uses such as for cleaning equipment.

If virgin fibre paper is made from wood, water is employed to separate the cellulose fibres from the lignin. If the raw material that is being employed is waste paper for recycling, water is also employed to separate the cellulose fibres from the unsuitable materials (staples, sand, plastic and other).

An aqueous solution of cellulose fibres is then prepared, the manufacturing technique being based on the natural property that cellulose fibres have of joining together in the presence of water, without the need for adhesives.

Once in the production machine, the cellulose pulp goes through different phases where the sheet is first formed on a forming cloth where water is extracted by gravity and is subsequently driven by a roller system to other parts of the process for drying by pressure, vacuum and eventually thermal drying systems.

Controlling the biological content of the water is key in the production process and in the quality of the product obtained. In this regard, we can classify water into three types: fresh supply and catchment water, production process water and wastewater.

Fresh supply and catchment water usually comes from a river, reservoir or well. These waters are normally not suitable for human consumption and have not been treated with any biocide treatment. These are waters with a strong organic load due to drag and high microbiological contamination that, if not removed, tend to proliferate and develop to the detriment of the production process.

Conventional treatments for fresh water in pulp, paper and cardboard factories, given their low cost, are based on chlorine-based oxidising biocides, usually of the sodium hypochlorite type.

Production process water is used in the manufacturing process of pulp, paper and cardboard. The production process requires huge amounts of water in a continuous cycle that is recovered and reused in closed circuits, where part is sent to purification and discharge and/or is recovered, part evaporates in the production process itself and another part is provided as process renewal fresh water.

Due to the conditions to which the water is subjected (pH, conductivity, temperature) and the high contamination from the raw material (extremely high in recycled paper and cardboard), favourable conditions arise for the proliferation and exponential growth of microbial mass. Their uncontrolled growth causes serious problems in the production process, in particular performance losses of the different additives applied for the process (retention agents, glues, defoamers, bleaching agents, etc.), deposit problems that cause damage to equipment and quality problems in the final product and, above all, generating decomposition problems due to anaerobic conditions in the medium that cause odours and putrefaction.

Microbiological treatments currently applied to process waters employ organic formulations (DBNPA, Isothiazolines, Bronopo, Glutaraldehyde) and inorganic formulations (usually MCDMH, MCA-type chlorine-derived oxidants) in usually discontinuous processes. They are dosed at strategic points in the production circuit and with a dosage schedule that makes them economically viable and allows reasonable control of the microbiological population and minimise the harmful effects described.

This method has the drawback that the dose applied at a cost/efficiency ratio of a biocidal treatment of the machine is not sufficient to eliminate
the problems of microbiological growth and fermentation processes developed, and only a partial control thereof is achieved in sawtooth cycles because the dosage is in alternate and not continuous cycles due to economic unfeasibility.

On the other hand, this type of product can cause corrosion damage to lines and pipes in the production process, in addition to the occupational risks that their handling implies.

In addition to the overall toughening of national and international legislation on formulations available on the market.

All this makes it advisable to search for alternatives that can reduce these drawbacks, increasing the efficiency of the control of microbiological proliferation and its effects.

One way employed in water treatment is the use of oxygen and ozone. Ozone is a substance whose molecule is composed of three oxygen atoms, having the formulation O₃ and gas form at atmospheric pressure. By their very nature, pure oxygen and ozone are highly oxidising agents, being microbiocidal agents, that is, capable of eliminating pathogenic microorganisms. They are usually employed dissolved in water and, the higher the biocidal efficiency necessary, the higher is the concentration also necessary, which increases the cost. Although found naturally in the atmosphere, for industrial use ozone is artificially generated by means of ozonator devices or ozone generators, which carry out said generation by means of electrical energy. For the use of ozone in this application in a competitive manner, it would be convenient to maximise the concentration while minimising the energy cost.

In addition, it is noteworthy that the current systems for concentrating oxygen and ozone gas in water in those industrial sectors in which they are being used, operate by solubilisation in the gas phase or under pressure, which implies an almost immediate loss of the solubilised gas once that the system is depressurised and/or the dosage point is far from the point of its generation. This considerably limits the efficiency of treatments based on this technology with conventional means of application.

It is for all these reasons that there is an unmet need in the market for methods for treating water employed in the production process of wood pulp, paper and cardboard that allow the effective control of the microbiological population, transforming anaerobic environments into aerobic ones, eliminating problems of odours and fermentations, supplementing the current treatments in the intervals between dosages, or overlapping them, not allowing such an accentuated proliferation between treatment shocks and allowing the lethal dose of the biocidal treatment to be reduced. Likewise, they need a greater capacity for recovering water, minimising its consumption, as well as reducing the consumption of conventional biocide with what is involved in its management and handling, and thereby reducing the environmental impact by applying natural gaseous elements such as oxygen and ozone at high concentrations and with high efficiency. All this at a reduced cost, allowing more efficient treatments than the current ones exclusively based on biocide.

### EXPLANATION OF THE INVENTION

The object of the present invention is to obtain a method for treating water using nanobubbles and biocide in the production of wood pulp, paper and cardboard that allows the effective control of the microbiological population, transforming anaerobic environments into aerobic ones, eliminating problems of odours and fermentations, supplementing the current treatments in the intervals between dosages, or overlapping them, not allowing such an accentuated proliferation between treatment shocks and allowing the lethal dose of the biocidal treatment to be reduced, allowing more efficient treatments than the current ones exclusively based on biocide.

Another object of the present invention is to obtain a method for treating water using nanobubbles and a biocide in the production of wood pulp, paper and cardboard that has a high capacity for recovering water, minimising its consumption, as well as reducing the consumption of conventional biocide with what is involved in its management and handling, and thereby reducing the environmental impact by applying natural gaseous elements such as oxygen and ozone at high concentrations and with high efficiency, it being possible to also employ other gaseous elements.

Nanobubbles are defined as extremely small bubbles with a size of between 70 and 120 nanometres (about 2,500 in the size of a grain of salt). They can be formed through the injection of any gas into a liquid medium (usually aqueous) and are so small that they remain in the liquid phase, thanks to Brownian and not ascending movements, even for hours. Thanks to the large contact surface, the transfer of gas (such as atmospheric oxygen, pure oxygen or ozone) to water is much more efficient, which allows reaching large concentrations of said gas in the medium and enhancing the effects that are to be exploited in its use and which in our case is as a high-efficiency oxidising agent.

There is nanobubble generation equipment on the market, such as that described in ES1263409, which allows reaching extremely high values in concentrations of the gas introduced in its generation greater than 30 ppm of O₂ and greater than 5 ppm of O₃ in oxygen and/or high-purity ozone supply. These gases at such concentrations are highly toxic for all the microorganisms present in the medium, reaching high levels of Redox potential and showing high efficiency in the control of said microorganisms through the use of bioluminescence measurements with rapid response adenosine triphosphate (ATP) or by conventional growth cultures in Petri dishes.

The method object of the present invention consists of the combined use of gaseous nanobubbles in an aqueous medium using any gas, mainly atmospheric air, pure oxygen or ozone, but also gaseous biocides and/or any gaseous element that can be introduced into the nanobubble, and conventionally used biocides (in their broadest definition, extension, origin and/or nature) in the production of wood pulp, paper or cardboard, including production process water, wastewater and fresh river and/or well water supplying the production process.

The method object of the present invention consists in the case of the treatment of fresh supply and catchment water in the following steps:
1st The water from a river, reservoir or well passes through a nanobubble generator equipment in which a gas is injected, said gas being oxidising and consisting of oxygen in atmospheric air, pure oxygen or high-purity ozone.
2nd Biocide is added as a supplement to the treatment and at a lower dose than is usually necessary in individualised treatments.
3rd The water passes to the production process.

It is also possible to reverse the order of the above steps, first adding the biocide to the water and second passing through the nanobubble generator, whereby the method would be:
1st Biocide is added to the water from a river, reservoir or well.
2nd The water with biocide passes through the nanobubble generator in which a gas is injected, said gas being oxidising and consisting of atmospheric air containing oxygen, pure oxygen or high-purity ozone.
3rd The water passes to the production process.

In the case of production process water, the method consists of the following steps:
1st Biocide is added to the water of the production process. It is a treatment according to conventional guidelines, highlighting dosage point strategies, dosage cycles and required dose.
2nd Storage of the water remaining in each phase of the production process.
3rd The stored water passes through nanobubble generator equipment in which a gas is injected, said gas being oxidising and consisting of atmospheric air containing oxygen, pure oxygen or high-purity ozone.

The addition of the nanobubbles can also be carried out without water storage, that is, directly "online" into the production process itself, whereby the method would be:
1st Biocide is added to the water of the production process.
2nd The process water in the process flow itself passes through nanobubble generator equipment in which a gas is injected, said gas being oxidising and consisting of atmospheric air containing oxygen, pure oxygen or high-purity ozone.

In this way, a high level of sterilisation is generated that allows lowering the necessary doses of treatment with conventional biocides, achieving better sterilisation results at a lower cost and assuming a lower level of risk due to handling and corrosion.

However, in all of the above cases, the gas can be a gaseous biocide instead of atmospheric air, pure oxygen or ozone, without the advantages in this case inherent to these compounds, but with high efficiency due to the large contact surface that the nanobubbles allow.

Throughout the description and the claims, the word "comprises" and its variants are not intended to exclude other technical characteristics, components, additives or steps. For persons skilled in the art, other objects, advantages and characteristics of the invention will emerge partly from the invention and partly from the practice of the invention. The following examples and drawings are provided by way of illustration and are not intended to limit the present invention. In addition, the invention covers all possible combinations of particular and preferred embodiments indicated here.

### BRIEF DESCRIPTION OF THE DRAWINGS

To complement the description made and for the purpose of helping to better understand the characteristics of the invention, as an integral part of said description a set of drawings is enclosed wherein, by way of illustration but not limited to, the following has been represented:
Figure 1 shows a schematic diagram of a preferred embodiment for fresh supply and catchment water of the method for treating water using nanobubbles and biocide in the production of wood pulp, paper and cardboard object of the present invention.
Figure 2 shows a schematic diagram of a preferred embodiment for production process water of the method for treating water using nanobubbles and biocide in the production of wood pulp, paper and cardboard object of the present invention.

### PREFERRED EMBODIMENT OF THE INVENTION

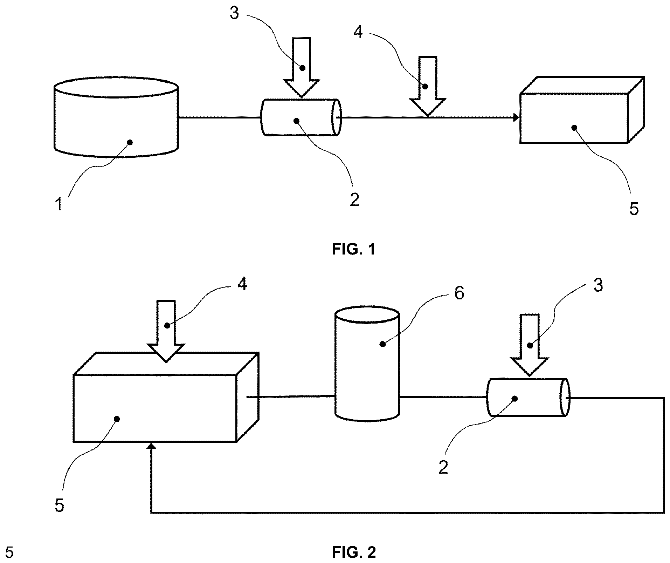

Employing the numbering adopted in Figures 1 and 2 of this document to identify the elements that are part of the method for treating water using nanobubbles in the production of wood pulp, paper and cardboard, the description of said method for two preferred embodiments of the invention is given.

The method for treating water using nanobubbles and biocide in the production of wood pulp, paper and cardboard consists of a preferred embodiment for the treatment of fresh supply and catchment water in the following steps:
1st The water from a river, reservoir or well (1) passes through a nanobubble generator equipment (2) in which a gas (3) is injected, said gas being oxidising and consisting of atmospheric air containing oxygen, pure oxygen or high-purity ozone.
2° Biocide (4) is added to the mixture with nanobubbles as a supplement to the treatment and at a lower dose than that usually used individually.
3rd The water passes to the production process (5).

In a preferred embodiment, it is also possible to reverse the order of the above steps, first adding the biocide to the water and second passing through the nanobubble generator.

The method for treating water using nanobubbles and biocide in the production of wood pulp, paper and cardboard consists of another preferred embodiment for the treatment of production process water in the following steps:
1st Biocide (4) is added to the water of the production process (5).
2nd Storage (6) of the water remaining in each phase of the production process.
3rd The stored water (6) passes through nanobubble generator equipment (2) in which a gas (3) is injected, said gas being oxidising and consisting of atmospheric air containing oxygen, pure oxygen or high-purity ozone.

In a preferred embodiment, the addition of the nanobubbles can also be carried out without water storage, that is, directly "online" into the production process flow itself.

## Claims

1. Method for treating water using nanobubbles and biocide in the production of wood pulp, paper and cardboard that employs a nanobubble generator (2) **characterised in that** it makes a combined use of gaseous nanobubbles in an aqueous medium and conventionally used biocides and consists of the following steps for the treatment of fresh supply and catchment water:
1st The water from a river, reservoir or well (1) passes through the nanobubble generator (2) in which a gas (3) is injected, said gas being oxidising and consisting of atmospheric air containing oxygen, pure oxygen or high-purity ozone.
2nd Biocide (4) is added to the mixture with nanobubbles.
3rd The water passes to the production process (5).

2. Method for treating water using nanobubbles and biocide in the production of wood pulp, paper and cardboard that employs a nanobubble generator (2) **characterised in that** it makes a combined use of gaseous nanobubbles in an aqueous medium and conventionally used biocides and consists of the following steps for the treatment of fresh supply and catchment water:
1st Biocide (4) is added to the water from a river, reservoir or well (1).
2nd The water (1) with biocide (4) passes through the nanobubble generator (2) in which a gas (3) is injected, said gas being oxidising and consisting of atmospheric air containing oxygen, pure oxygen or high-purity ozone.
3rd The water passes to the production process (5).

3. Method for treating water using nanobubbles and biocide in the production of wood pulp, paper and cardboard that employs a nanobubble generator (2) **characterised in that** it makes a combined use of gaseous nanobubbles in an aqueous medium and conventionally used biocides and consists of the following steps for the treatment of production process water:
1st Biocide (4) is added to the water of the production process (5).
2nd Storage (6) of the water remaining in each phase of the production process.
3rd The stored water (6) passes through nanobubble generator equipment (2) in which a gas (3) is injected, said gas being oxidising and consisting of atmospheric air containing oxygen, pure oxygen or high-purity ozone.

4. Method for treating water using nanobubbles and biocide in the production of wood pulp, paper and cardboard that employs a nanobubble generator (2) **characterised in that** it makes a combined use of gaseous nanobubbles in an aqueous medium and conventionally used biocides and consists of the following steps for the treatment of production process water:
1st Biocide (4) is added to the water of the production process (5).
2nd The process water (5) in the process flow itself passes through nanobubble generator equipment (2) in which a gas (3) is injected, said gas being oxidising and consisting of atmospheric air containing oxygen, pure oxygen or high-purity ozone.

5. Method for treating water using nanobubbles and biocide in the production of wood pulp, paper and cardboard according to claim 1, **where** the gas (3) consists of gaseous biocide.

6. Method for treating water using nanobubbles and biocide in the production of wood pulp, paper and cardboard according to claim 2, **where** the gas (3) consists of gaseous biocide.

7. Method for treating water using nanobubbles and biocide in the production of wood pulp, paper and cardboard according to claim 3, **where** the gas (3) consists of gaseous biocide.

8. Method for treating water using nanobubbles and biocide in the production of wood pulp, paper and cardboard according to claim 4, **where** the gas (3) consists of gaseous biocide.
